# EUROPEAN PATENT SPECIFICATION

(11) **EP 4 008 183 B1**
(45) Date of publication and mention of the grant of the patent: **01.05.2024**
(21) Application number: 21212512.4
(22) Date of filing: 06.12.2021
(51) Int. Cl.: A01M 29/00, A01M 29/08

(54) **AVIAN DISTRACTOR DEVICE**
VOGELABLENKUNGSVORRICHTUNG
DISPOSITIF DE DISTRACTION AVIAIRE

(30) Priority: 07.12.2020 IN 202041053180
(43) Date of publication of application: 08.06.2022
(73) Proprietor: TE Connectivity Services GmbH, 8200 Schaffhausen (CH); TE Connectivity Ireland Limited, 1 Dublin (IE)
(72) Inventor: McGowan, Brian, Shannon (IE); Mulligan, Jason, Shannon (IE); S, Ravi, Karnataka (IN); Vade, Praveena, Karnataka (IN); Kushtagi, Praveen, Karnataka (IN); Tijare, Vijay Wasudeorao, Karnataka (IN)
(74) Representative: Grünecker Patent- und Rechtsanwälte PartG mbB

(56) References cited:
- ES-A1- 2 333 397
- JP-A- 2008 271 676
- US-B1- 8 869 732
- US-B2- 9 331 465
- Rick Harness: "Using an Unmanned Aerial Vehicle to Install Wire Markers to Mitigate Bird Collisions ENV-VISION: Environmental Vision", , 25 May 2016 (2016-05-25), XP055593823, Retrieved from the Internet: URL:https://epristorage.blob.core.windows. net/documents/Rick%20Harness_EDM%20Interna tional.pdf [retrieved on 2019-06-04]

## Description

### TECHNICAL FIELD OF THE INVENTION

The present invention relates to an avian distractor device for preventing collision of birds or other wildlife with overhead lines, (eg power lines, communication lines, or any other overhead obstruction in the wildlife's path).

### BACKGROUND OF THE INVENTION

An avian distractor or a bird diverter is a device that is attached to an overhead structure to alert and divert birds and other wildlife away from the line in order to avoid accidents and fatalities. Such devices are particularly useful for power and communication lines that cross lakes or rivers, where birds tend to flock together.

Majority of prior art distractor devices for repelling or alerting wildlife from collision and electrocution risks have a ball, a flapper or an indicator component attached to the conductor line via a clamp. Such prior art devices are coated with materials that do not reflect light so that the color or level of contrast with the environment are not visually recognized by the birds in flight. Such an approach reduces the power line visibility for the wildlife and increases their risk of collision. In some prior art approaches lines are marked with high-visibility devices, but the effectiveness of line marking remains unclear. Additionally, the clamp that holds the conductor lines may be disassembled due to strong winds or lack of sufficient fixed engagement with the power line. Furthermore, the assembly of the device to the conductor lines are time consuming, difficult in the context of energized lines, and dangerous to persons performing the alterations or assembly. However, differences in efficacy between the types of devices and in some cases conflicting results reduces the ability of these devices to reduce collision risk to the wildlife.
US 8 869 732 B1 discloses a diverter for diverting birds away from overhead lines. The diverter includes a plastic plate substrate having an upper portion and a lower portion, wherein the upper portion is narrower than the lower portion.
Rich Harness :"Using an Unmanned Aerial Vehicle to Install Wire Markers to Mitigate Bird Collisions ENV-ViSION: Environmental Vision", 25 May 2016, URL: https://epristrorage.blob.core.windows.net/documents/Rick%20Harness_EDM%20Int ernational.pdf, discloses measures for mitigating bird collisions.
JP 2008 271676 A discloses a bird clash preventer equipped with balls having mirror for reflecting light, wherein the balls are attached rotatably to a shaft which is hung down from a clamp holding a transmission line.
US 9,331,465 B2 relates to an aerial marker assembly. An aerial marker is made in multiple parts, having various parting lines, including a vertical parting line, and is hung in a spaced relationship to support cables.
ES 2 333 397 A1 relates to a cable beacon, of the type with a substantially spherical configuration, which is mounted on the cable so that it is inserted internally along one of the axes of the spherical body of the beacon.
It is therefore the object of the present invention to provide an improved avian distractor device.
This object is solved by the subject-matter of claim 1. Preferred embodiments are defined by the dependent claims.

Hence, there is a need in that art to provide a solution to address all the above mentioned problems. The present invention relates to an improved avian distractor device that is relatively inexpensive, easy to assemble, sturdy, durable, modular and easy to install.

### SUMMARY OF THE INVENTION

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

An object of the present invention is to provide an avian distractor device for preventing collision of birds and other wildlife with overhead structures (including lines and towers).

Another object of the present invention is to provide an avian distractor device that are relatively inexpensive, easy to assemble, sturdy, durable, modular and easy to install.

Yet another object of the present invention is to provide an avian distractor device that is capable of reducing wind loading on the overall component and on the connection zone between clamp and indicator in windy conditions and prevent mechanical failure associated with fatigue

Yet another object of the present invention is to provide an avian distractor device that is capable of increasing low light, dawn/dusk visibility to wildlife.

Yet another object of the present invention is to provide an avian distractor device that is attached to a variety of structures.

According to one aspect of the present invention, an avian distractor device is disclosed which includes a clamp having a pair of jaws attached to a hinge via a plurality of springs and a locking member disposed in communication with the pair of jaws to rigidly hold a conductor of different sizes using the spring force. A spherical diverter having two interlocking hemispheres is mechanically interlocked via a male and female slot located at its end. A fastener is threaded via a center portion of the spherical diverter via a swivel molded structure located at an inner side of the lower hemisphere to rotatably attach the spherical diverter to the hinge and the clamp.

A retro-reflective is encircled on a central portion of the spherical diverter to enhance visibility of the device while sealing the joint between the 2 halves from moisture ingress. A plurality of dimples is located on an external surface of the spherical diverter and on a connection zone between the clamp and the spherical diverter to reduce a drag force on the device. The spherical diverter reflects any available light in all directions and is visible from all directions including above or below the diverter. The locking member further includes a locking cover for covering the locking member of the clamp via screws to rigidly hold and lock the conductor. The jaws include a plurality of UV Stabilized rubber inserts for better flexibility and cushioning effect to hold the conductor.

The pair of jaws snaps the clamp on and off around the conductor and is fitted by hand, an insulated rod (known as a hot stick) or by a drone using an attachment hole located on the jaws. The device can be installed in live (energized) or dead (de-energised) line conditions. The clamp is composed of a polyamide structure with an ultraviolet and thermal stability to increase visibility of the device to the wildlife. The spherical diverter is composed of a polymer material with a photo-phosphorence pigment to induce a night glow effect onto the spherical diverter. The polymer material is composed of a polycarbonate material or polyacetal material. The spherical diverter is reflective and rotate in response to the wind. The retro-reflective tape is composed of an orange color tape, a yellow color tape or a green color tape to enhance visibility of the device to the wildlife.

### BRIEF DESCRIPTION OF THE DRAWINGS

The disclosed embodiments may be better understood by referring to the figures, in which like reference numerals refer to identical or functionally-similar elements throughout the separate views, further illustrate the present invention and, together with the detailed description of the invention, serve to explain the principles of the present invention.
FIG. 1 illustrates a perspective view of an avian distractor device for preventing collision of birds and other wildlife with overhead structures (i.e. power lines), in accordance with an exemplary embodiment of the present invention;
FIG. 2 illustrates an exploded view of the avian distractor device, in accordance with an exemplary embodiment of the present invention;
FIG. 3 illustrates a perspective view of a bottom hemisphere of the spherical diverter with a swivel molded structure, in accordance with an exemplary embodiment of the present invention;
FIG. 4 illustrates a Side view of the avian distractor device, in accordance with an exemplary embodiment of the present invention;
FIG. 5 illustrates a perspective view the avian distractor device that is attached a cylindrical substrate, (i.e could be a powerline, communications line or another similar structure not necessarily cylindrical in cross section). in accordance with an exemplary embodiment of the present invention;
FIG. 6 illustrates a side view of the avian distractor device, in accordance with an exemplary embodiment of the present invention; and
FIG. 7 illustrates a sectional view of the avian distractor device, in accordance with an exemplary embodiment of the present invention.

### DETAILED DESCRIPTION OF THE INVENTION

The particular values and configurations discussed in these non-limiting examples can be varied and are cited merely to illustrate at least one embodiment and are not intended to limit the scope thereof.

In the following, numerous specific details are set forth to provide a thorough description of various embodiments. Certain embodiments may be practiced without these specific details or with some variations in detail. In some instances, certain features are described in less detail so as not to obscure other aspects. The level of detail associated with each of the elements or features should not be construed to qualify the novelty or importance of one feature over the others.

The claimed subject matter has been provided here with reference to one or more features or embodiments. Those skilled in the art will recognize and appreciate that, despite of the detailed nature of the exemplary embodiments provided here; changes and modifications may be applied to said embodiments without limiting or departing from the generally intended scope. These and various other adaptations and combinations of the embodiments provided here are within the scope of the disclosed subject matter as defined by the claims. Like numbers refer to like elements throughout.

The present invention relates to an avian distractor device for preventing collision of birds and other wildlife with overhead structures, (i.e. power lines, communication lines and structures). The avian distractor device is relatively inexpensive, easy to assemble, sturdy, durable, modular and easy to install. The avian distractor device is capable of reducing wind loading on the overall component and on a connection zone between a clamp and an indicator in windy conditions. The avian distractor device is also capable of increasing low light dawn/dusk visibility to wildlife and is attached to a variety of structures.

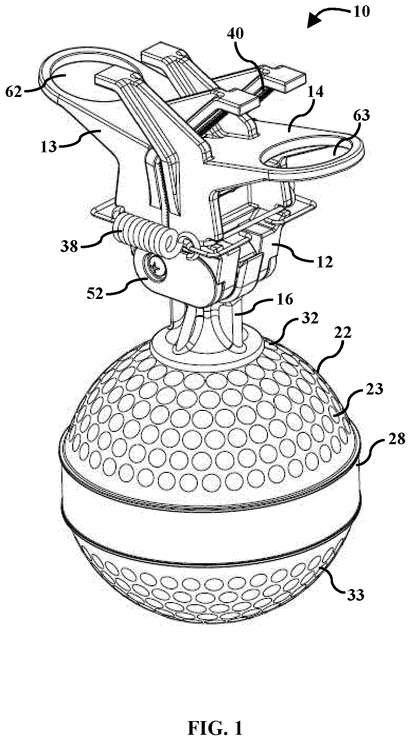

Referring to FIG. 1 a perspective view of an avian distractor device (10) for preventing collision of birds and other wildlife with overhead power lines is illustrated, in accordance with an exemplary embodiment of the present invention. Note that in FIGS. 1-7, identical or similar parts or components are generally indicated by identical reference numerals. The avian distractor device (10) includes a clamp (12) having a pair of jaws (13, 14) attached to a hinge (16) via a plurality of springs (18, 38). The clamp (12) is composed of a locking member (52) disposed in communication with the pair of jaws (13, 14) to rigidly hold a conductor (20) of different sizes using the spring force. The locking member (52) further includes threaded inserts and bolt to connect the spherical diverter (22), the hinge (16) and the clamp (12). The locking member (52) is composed of a locking cover (45, 46) for covering the locking member (52) of the clamp (12) via screws (44) to rigidly hold and lock the conductor (20). Note that the locking cover (45, 46) is made of plastic or other nonconductive, weather resistant material, based on design consideration.

In a preferred embodiment, the avian distractor device (10) is attached to the conductor (20) through the clamp (12). Note that as utilized herein, the term conductor (20) generally refers to an elongate object such as a solid or tubular rod, pipe, strut, radio masts or towers, or the like and specifically relate to a cable, wire, line, cord, conductor, or the like suspended above the ground, such as overhead power transmission lines, whether non-energized or low voltage, medium voltage, high voltage, extra high voltage, ultrahigh voltage, as aluminum conductors reinforced with steel, bundle conductors, ground conductors, aerial cables, antennas, electrical fence, overhead cable, or the like.

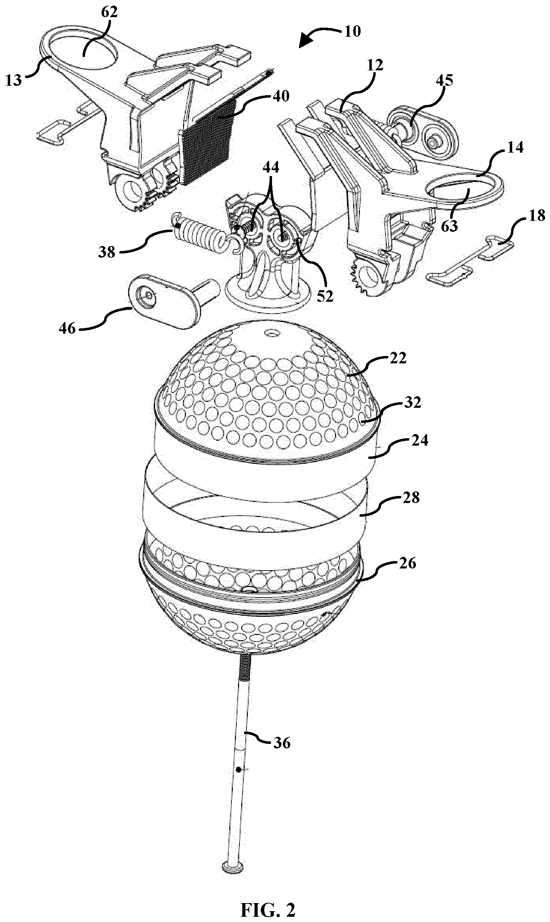

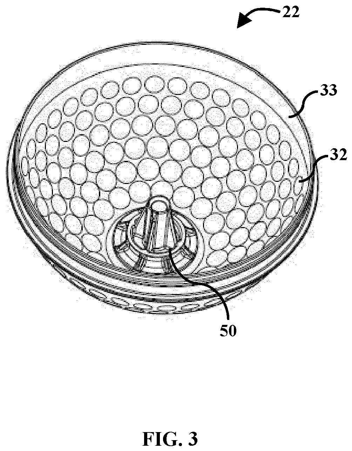

Referring to FIG. 2 an exploded view of the avian distractor device (10) is illustrated, in accordance with an exemplary embodiment of the present invention. The avian distractor device (10) is composed of a spherical diverter (22) having two interlocking hemispheres (23, 33). The interlocking hemispheres (23, 33) are mechanically interlocked via a male and female slot (24, 26) located at the ends of the interlocking hemispheres (23, 33). The spherical diverter (22) is reflective and rotates in response to the wind. A swivel molded structure (50) is located at an inner portion of the lower hemisphere (33), as shown in FIG. 3. A fastener (36) is threaded via a center portion of the spherical diverter (22) via the swivel molded structure (50) to rotatably attach the spherical diverter (22) to the hinge (16) and the clamp (12), as shown in FIG. 3. In general, a swivel is a cylindrical rod that can turn freely within a support structure. The rod is usually prevented from slipping out by a nut, washer or thickening of the rod. The lower hemisphere (33) is attached to the ends of the rod or the center. The swivel molded structure (50) located at the lower hemisphere (33) of the spherical diverter (22) allow the spherical diverter (22) to rotate as explained above.

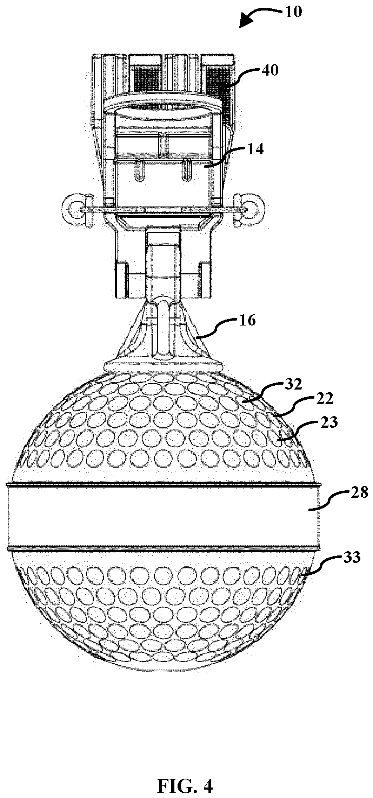

A retro-reflective tape (28) is encircled on a central portion of the spherical diverter (22) to enhance visibility of the device (10). In general, the retro-reflective tape (28) works by reflecting light back to the light source only. In a preferred embodiment, the spherical diverter (22) is composed of a polymer material such as, for example, polycarbonate material or polyacetal material with a photo-phosphorence pigment to induce a night glow effect onto the spherical diverter (22), based on design consideration. In general, phosphorescence is a type of photoluminescence related to fluorescence. Unlike fluorescence, a phosphorescent material does not immediately re-emit the radiation it absorbs. The slower time scales of the re-emission are associated with "forbidden" energy state transitions in quantum mechanics. As these transitions occur very slowly in certain materials, absorbed radiation is re-emitted at a lower intensity for up to several hours after the original excitation. The retro-reflective tape (28) is adhesively attached to the central portion of the spherical diverter (22), as shown in FIG. 4. The retro-reflective tape (28) refracts and reflects ambient light to make the diverter (22) visible to the wildlife. Note that the retro-reflective tape (28) is composed of an orange color tape, a yellow color tape or a green color tape to enhance visibility of the device (10) to the wildlife, based on design consideration.

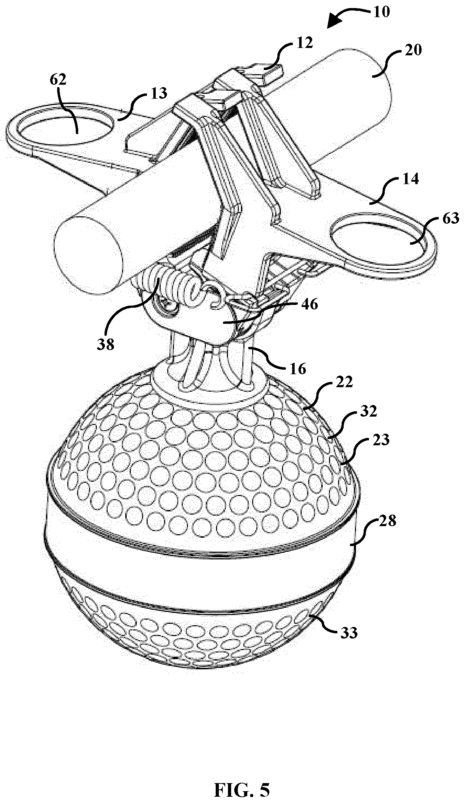

Referring to FIG. 5 a side view of the avian distractor device (10) is illustrated, in accordance with an exemplary embodiment of the present invention. The jaws (13, 14) are composed of a plurality of rubber inserts (40) with serrations for better flexibility and cushioning effect to hold the conductor (20). The pair of jaws (13, 14) snaps the clamp (12) on and off around the conductor (20). The avian distractor device (10) is opened by hand and closed in a "snap fit" process around the conductor (20) which can be a live conductor or guy wire. In a preferred embodiment, the avian distractor device (10) is fitted to the conductor (10) by an insulated rod. The avian distractor device (10) is also drone installable and is held by a drone using an attachment hole (62, 63) in the extension of the clamp (12), based on design consideration. These attachment holes (62, 63) also serve to provide a holding point used to open the clamp (12).

The spherical diverter (22) is translucent so that light enters within the material and emerge out through the retro-reflective tape (28) to help brighten the phosphorescence colors. A plurality of dimples (32) is located on an external surface of the spherical diverter (22) and on a connection zone between the clamp (12) and the spherical diverter (22) to reduce a drag force on the device (10). In a preferred embodiment, the dimples (32) are spherical in shape to reduce a drag force on the device (10). The avian distractor device (10) uses light through reflectance and refraction, and motion through rotation, oscillation and vibration to divert birds and wildlife away from the power line and other structures on which birds typically perch or against which birds may collide.

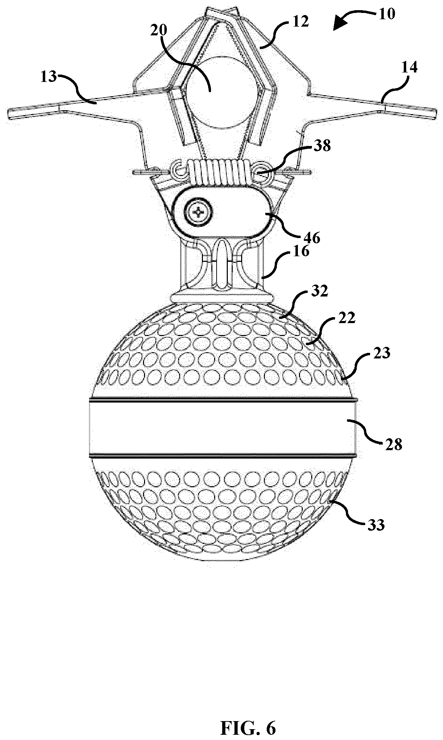

Referring to FIG. 6 a front view the avian distractor device (10) that holds the conductor (20) is illustrated, in accordance with an exemplary embodiment of the present invention. Again as reminder, in FIGS. 1-7, identical or similar parts or components are generally indicated by identical reference numerals. The spherical shape of the diverter (22) reflects any available light in all directions and is visible from all directions including above or below the diverter (22). The clamp (12) is made of polyamide structure with ultraviolet and thermal stability to increase visibility of the device (10) to the wildlife. The polyamide structure absorbs stray light in low light conditions and will not break down under natural sunlight exposure. This type of plastic advantageously magnifies and enhances the phosphorescence material that is applied to the surface of the substrate.

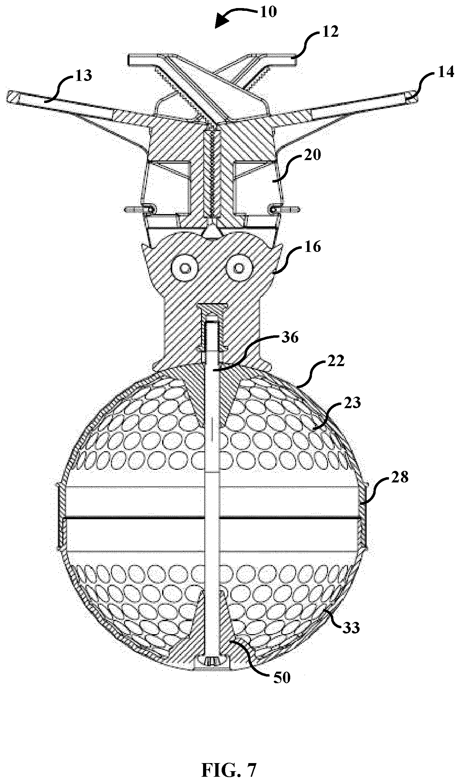

Referring to FIG. 7 a sectional view of the avian distractor device (10) is illustrated, in accordance with an exemplary embodiment of the present invention. The diverter (22) is preferably substantially spherical. The spherical diverter (22) with photo-phosphorence pigments induces night glow effect on to the spherical diverter (22). The colors on the reflective tape (28) of the diverter (22) during rotation, oscillation, and/or vibrations is enhanced to approaching birds, animals and bats and thereby causing the wildlife to avoid collisions with wires. Note that the embodiments discussed herein should not be construed in any limited sense. It can be appreciated that such embodiments reveal details of the structure of a preferred form necessary for a better understanding of the invention and may be subject to change by skilled persons within the scope of the invention without departing from the concept thereof.

The avian distractor device (10) is lightweight, easily and quickly installed by hand. The positive grip on the conductor (20) ensures the avian diverter device (10) remains in the applied location. The avian distractor device (10) has a long service life without deterioration of material properties with minimal wind resistance. The clamp (12) snaps on and off quickly and easily. The clamp (12) is fitted by hand or by drone. The avian distractor device (10) can be any suitable size, shape, and configuration, and has a sufficiently large wind-catching surface, and is large enough to deter birds or other wildlife.

## Claims

1. An avian distractor device (10), comprising:
a clamp (12) having a pair of jaws (13, 14) attached to a hinge (16) via a plurality of springs (18, 38) and a locking member (52) disposed in communication with the pair of jaws (13, 14) to rigidly hold a conductor (20) of different sizes using the spring force;
a spherical diverter (22) having two interlocking hemispheres (23, 33) mechanically interlocked via a male and female slot (24, 26) located at its end and a fastener (36) threaded via a center portion of the spherical diverter (22) via a swivel molded structure (50) located at an inner side of the lower hemisphere (33) to rotatably attach the spherical diverter (22) to the hinge (16) and the clamp (12); and
a retro-reflective tape (28) encircled on a central portion of the spherical diverter (22) to enhance visibility of the device (10) to the wildlife and a plurality of dimples (32) located on an external surface of the spherical diverter (22) and on a connection zone between the clamp (12) and the spherical diverter (22) to reduce a drag force on the device (10).

2. The device (10) of claim 1, wherein the locking member (52) comprises a locking cover (45, 46) for covering the locking member (52) of the clamp (12) via screws (44) to rigidly hold and lock the conductor (20).

3. The device (10) of claim 1, wherein the jaws (13, 14) comprises a plurality of rubber inserts (40) to flexibly hold the conductor (20).

4. The device (10) of claim 1, wherein jaws (13, 14) snaps the clamp (12) on and off around the conductor (20) and is fitted by hand, an insulated rod or by a drone using an attachment hole (62, 63) located on the jaws (13, 14).

5. The device (10) of claim 1, wherein the clamp (12) is composed of a polyamide structure with an ultraviolet and thermal stability to enhance visibility and ensure long durability.

6. The device (10) of claim 1, wherein the spherical diverter (22) is reflective and rotate in response to the wind.

7. The device (10) of claim 1, wherein the spherical diverter (22) is composed of a polymer material with a photo-phosphorence pigment to induce a night glow effect onto the spherical diverter (22).

8. The device (10) of claims 1 and 7, wherein the polymer material comprises a polycarbonate material or a polyacetal material.

9. The device (10) of claim 1, wherein the retro-reflective tape (28) is composed of an orange color tape, a yellow color tape or a green color tape.

## Patentansprüche

1. Vogelschutzvorrichtung (10), die umfasst:
eine Klemme (12) mit einem Paar Backen (13, 14), die über eine Vielzahl von Federn (18, 38) an einem Scharnier (16) angebracht sind, sowie einem Verriegelungselement (52), das in Verbindung mit den paarigen Backen (13, 14) angeordnet ist, um einen Leiter (20) unterschiedlicher Größe unter Verwendung der Federkraft fest zu halten;
eine kugelförmige Schutzeinrichtung (22) mit zwei ineinandergreifenden Halbkugeln (23, 33), die über einen Außen- und einen Innen-Schlitz (24, 26), die sich an ihrem Ende befinden, mechanisch verriegelt sind, und einem Befestigungselement (36), das über einen mittleren Abschnitt der kugelförmigen Schutzeinrichtung (22) und eine geformte Schwenkstruktur (50) verschraubt ist, die sich an einer Innenseite der unteren Halbkugel (33) befindet, um die kugelförmige Schutzeinrichtung (22) drehbar an dem Scharnier (16) und der Klemme (12) zu anzubringen; und
ein rückreflektierendes Band (28), das einen Mittelabschnitt der kugelförmigen Schutzeinrichtung (22) umschließt, um Sichtbarkeit der Vorrichtung (10) für die Wildtiere zu verbessern, sowie eine Vielzahl von Vertiefungen (32), die sich an einer Außenfläche der kugelförmigen Schutzeinrichtung (22) und an einer Verbindungszone zwischen der Klemme (12) und der kugelförmigen Schutzeinrichtung (22) befinden, um einen Luftwiderstand an der Vorrichtung (10) zu verringern.

2. Vorrichtung (10) nach Anspruch 1, wobei das Verriegelungselement (52) eine Verriegelungs-Abdeckung (45, 46) zum Abdecken des Verriegelungselementes (52) der Klemme (12) über Schrauben (44) zum festen Halten und Verriegeln des Leiters (20) umfasst.

3. Vorrichtung (10) nach Anspruch 1, wobei die Backen (13, 14) eine Vielzahl von Gummieinsätzen (40) zum flexiblen Halten des Leiters (20) umfassen.

4. Vorrichtung (10) nach Anspruch 1, wobei die Backen (13, 14) die Klemme (12) um den Leiter (20) herum auf- und abschnappen lassen und von Hand mit einer isolierten Stange oder mit einer Drohne unter Verwendung eines an den Backen (13, 14) befindlichen Anbringungslochs (62, 63) angebracht werden.

5. Vorrichtung (10) nach Anspruch 1, wobei die Klemme (12) aus einer Polyamid-Struktur mit Ultraviolett- und Wärmebeständigkeit besteht, um Sichtbarkeit zu verbessern und lange Haltbarkeit zu gewährleisten.

6. Vorrichtung (10) nach Anspruch 1, wobei die kugelförmige Schutzeinrichtung (22) reflektierend ist und sich in Reaktion auf den Wind dreht.

7. Vorrichtung (10) nach Anspruch 1, wobei die kugelförmige Schutzeinrichtung (22) aus einem Polymer-Material mit einem Photophosphorenz-Pigment besteht, um einen Nachleuchteffekt an der kugelförmigen Schutzeinrichtung (22) zu erzeugen.

8. Vorrichtung (10) nach einem der Ansprüche 1 und 7, wobei das Polymer-Material ein Polycarbonat-Material oder ein Polyacetal-Material umfasst.

9. Vorrichtung (10) nach Anspruch 1, wobei das rückreflektierende Band (28) aus einem orangen Band, einem gelben Band oder einem grünen Band besteht.

## Revendications

1. Dispositif (10) de diversion aviaire, comprenant :
une pince (12) ayant une paire de mâchoires (13, 14) fixée à une charnière (16) par l'intermédiaire d'une pluralité de ressorts (18, 38) et un élément de verrouillage (52) disposé en communication avec la paire de mâchoires (13, 14) pour maintenir de manière rigide un conducteur (20) de différentes tailles en utilisant la force du ressort ;
un dispositif de dissuasion sphérique (22) ayant deux hémisphères emboîtées (23, 33) mécaniquement emboîtées par l'intermédiaire d'une fente mâle et femelle (24, 26) localisée au niveau de son extrémité et un dispositif de fixation (36) fileté par l'intermédiaire d'une portion centrale du dispositif de dissuasion sphérique (22) par l'intermédiaire d'une structure moulée à rotule (50) localisée au niveau d'un côté interne de l'hémisphère inférieur (33) pour fixer de manière à pouvoir tourner le dispositif de dissuasion sphérique (22) à la charnière (16) et à la pince (12) ; et
une bande rétro-réfléchissante (28) encerclée sur une portion centrale du dispositif de dissuasion sphérique (22) pour améliorer la visibilité du dispositif (10) pour la vie sauvage et une pluralité de fossettes (32) localisées sur une surface externe du dispositif de dissuasion sphérique (22) et sur une zone de raccordement entre la pince (12) et le dispositif de dissuasion sphérique (22) pour réduire une force de glissement sur le dispositif (10).

2. Dispositif (10) selon la revendication 1, l'élément de verrouillage (52) comprenant un couvercle de verrouillage (45, 46) pour recouvrir l'élément de verrouillage (52) de la pince (12) par des vis (44) pour maintenir et verrouiller de manière rigide le conducteur (20).

3. Dispositif (10) selon la revendication 1, les mâchoires (13, 14) comprenant une pluralité d'inserts en caoutchouc (40) pour maintenir de manière souple le conducteur (20).

4. Dispositif (10) selon la revendication 1, des mâchoires (13, 14) clipsant la pince (12) sur et autour du conducteur (20) et étant ajustées à la main, une tige isolée ou par un drone en utilisant un trou de fixation (62, 63) localisé sur les mâchoires (13, 14).

5. Dispositif (10) selon la revendication 1, la pince (12) étant composée d'une structure en polyamide avec une stabilité aux ultraviolets et thermique pour améliorer la visibilité et garantir une durabilité à long terme.

6. Dispositif (10) selon la revendication 1, le dispositif de dissuasion sphérique (22) étant réfléchissant et pouvant tourner en fonction du vent.

7. Dispositif (10) selon la revendication 1, le dispositif de dissuasion sphérique (22) étant composé d'un matériau polymère avec un pigment photo-phosphorescent pour induire un effet brillant dans le noir sur le dispositif de dissuasion sphérique (22).

8. Dispositif (10) selon les revendications 1 et 7, le matériau polymère comprenant un matériau polycarbonate ou un matériau polyacétal.

9. Dispositif (10) selon la revendication 1, la bande rétro-réfléchissante (28) étant composée d'une bande de couleur orange, d'une bande de couleur jaune ou d'une bande de couleur verte.
